Europäisches Patentamt

European Patent Office

Office européen des brevets

(11) Veröffentlichungsnummer: **0 151 406**
**B1**

(12) # EUROPÄISCHE PATENTSCHRIFT

(45) Veröffentlichungstag der Patentschrift:
**10.01.90**

(21) Anmeldenummer: **85100378.0**

(22) Anmeldetag: **16.01.85**

(51) Int. Cl.⁴: **A 47 B 96/20,** B 32 B 9/04,
F 16 B 12/14

(54) **Möbel mit Tragteilen.**

(30) Priorität: **08.02.84 DE 8403666 U**

(43) Veröffentlichungstag der Anmeldung:
**14.08.85 Patentblatt 85/33**

(45) Bekanntmachung des Hinweises auf die Patenterteilung:
**10.01.90 Patentblatt 90/2**

(84) Benannte Vertragsstaaten:
**AT CH DE FR GB IT LI**

(56) Entgegenhaltungen:
**AT-C- 352 966**
**BE-A- 840 581**

(73) Patentinhaber: **Dallwitz, Lothar, Pfingstweide 19,
D-6360 Friedberg 1 (DE)**

(72) Erfinder: **Dallwitz, Lothar, Pfingstweide 19,
D-6360 Friedberg 1 (DE)**

(74) Vertreter: **Blumbach Weser Bergen Kramer Zwirner
Hoffmann Patentanwälte, Sonnenbergerstrasse 43,
D-6200 Wiesbaden 1 (DE)**

ACTORUM AG

## Beschreibung

Die Erfindung bezieht sich auf ein Möbel, insbesondere Bett, Schrank oder Schreibtisch.

Möbel weisen üblicherweise ein Gestell aus Holz oder Metall auf, und dieses Gestell setzt sich gewöhnlich aus Tragteilen zusammen, die mit Verbindungselementen untereinander sowie gegebenenfalls mit einem Rahmen verbunden sind. Die Verwendung von Stein und insbesondere Marmor für Tische ist nicht mehr neu.

Bekannt ist ferner (BE-A-840 581), geschnittene Marmortafeln miteinander oder mit Sperrholz, Wabenmaterial oder anderen Versteifungsplatten zu verkleben, um ein Produkt zu erhalten, das sich besonders für die Täfelung, Verblendung oder Verkleidung eignet und zu dekorativen Zwecken in der Architektur verwendet werden kann. Das Dokument enthält keinen Hinweis auf die Verwendung dieses Materials zum Bau von Möbeln.

Bauplatten, die aus miteinander verklebten Einzelplatten bestehen, sind generell bekannt (AT-C-352 966). Die Einzelplatten können aus Marmor bestehen. Zum guten Zusammenhalt dieser Marmorplatten wird eine wasserglasverklebte Klebeschicht erwähnt. Es gibt keine Hinweise, die Bauplatte in der Möbelbranche zu verwenden.

Der Erfindung liegt die Aufgabe zugrunde, das spröde Material Stein zum Bau von Möbeln, insbesondere Betten, Schränken und Schreibtischen, zur Verfügung zu stellen.

Die gestellte Aufgabe wird durch ein Möbel mit folgenden Merkmalen gelöst: Das Möbelstück enthält ·Tragteile aus Verbund-Marmorplatten und Verbindungselementen sowie gegebenenfalls Zusatzteile (Füße, Leisten); die Tragteile bestehen aus jeweils zwei Marmorplatten, die unter Zwischenlage einer Kunststoffschicht miteinander verklebt sind; die Verbund-Marmorplatten sind mit Durchgangsbohrungen und/oder mit Sacklöchern versehen, in denen jeweils eine Metallhülse oder ein Stift oder ein Knebel verkittet ist; die Tragteile sind entweder unter Verwendung der Verbindungselemente miteinander verbunden, wobei die Verbindungselemente an den Stiften oder den Knebeln oder mittels Schraubstiften an den Metallhülsen befestigt sind, oder die Tragteile sind unmittelbar unter Verwendung von Schraubstiften, die durch Durchgangsbohrungen des einen Tragteils hindurch in Metallhülsen des jeweils anderen Tragteils eingeschraubt sind, miteinander verbunden.

Mit den neuartigen Möbeln gemäß Erfindung können besondere Effekte erzielt werden. Zudem kann der Gebrauchswert dieser Möbel wegen des kühlenden Effekts von Stein in heißen Ländern erhöht sein.

Eine besonders gute Tragfähigkeit der Tragteile wird dann erzielt, wenn Polyesterharz als Kleber verwendet wird und ein Gewebe in dem Polyesterharz eingebettet ist. Das Gewebe kann aus Glasfasern, Carbonatfasern oder Polyamidfasern bestehen.

Die Verbindungselemente der Tragteile können mittels eingekitteter Stifte an ihrem jeweiligen Tragteil befestigt sein. Dabei ist es möglich, die Stifte als Verankerungsteil mit einem Schraubgewinde vorzusehen.

Die Dicke der Marmorplatten beträgt etwa 2 cm.

Ausführungsbeispiele der Erfindung werden anhand der Zeichnung beschrieben. Dabei zeigt:

Fig. 1 ein Bettgestell, von oben gesehen,
Fig. 2 eine Ansicht vom Kopfteil des Bettes,
Fig. 3 eine Seitenansicht,
Fig. 4 eine vergrößerte Einzelheit des Bettes,
Fig. 5 eine weitere Ansicht vom Kopfende eines Bettes,
Fig. 6 eine Seitenansicht hierzu,
Fig. 7 einen Schrank von vorne,
Fig. 8 den Schrank von der Seite,
Fig. 9 eine vergrößerte Einzelheit,
Fig. 10 einen Schreibtisch von vorne,
Fig. 11 den Schreibtisch von unten und
Fig. 12 eine Einzelheit des Schreibtisches.

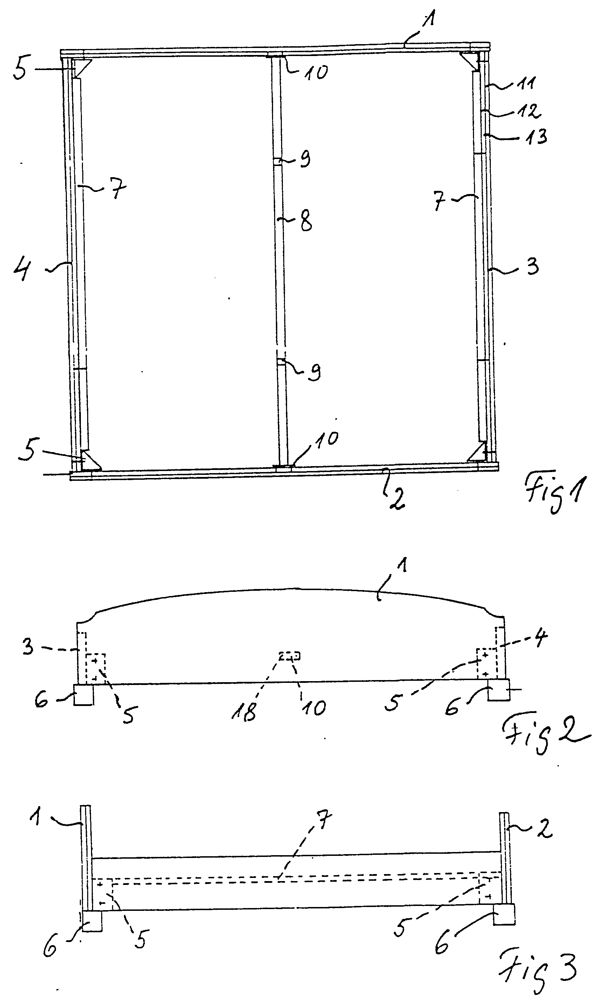

In Fig. 1 ist das Gestell eines Doppelbettes dargestellt. Dieses enthält als Tragteile eine Kopfplatte 1, eine Fußplatte 2 sowie zwei Seitenteile 3 und 4. Die Tragteile 1 bis 4 sind unter Verwendung von Eckwinkeln 5, beispielsweise aus Aluminium, im Sinne eines Rahmens miteinander verbunden. An den Rahmenecken sind Füße 6 vorgesehen. Innerhalb des rahmenartigen Gestells ist an den Seitenteilen 3 und 4 jeweils eine Holzleiste 7 angebracht, und eine Holzstrebe 8 überspannt den Raum zwischen Kopfteil und Fußteil 1, 2 und ist an diesen befestigt. Die Holzstrebe 8 wird durch zwei Füße 9 gestützt. Die Holzteile 7 und 8 bilden gewissermaßen einen Rahmen zur Aufnahme eines nicht dargestellten Federrahmens und einer Matratze.

Einfache Marmorplatten sind zu sehr bruchgefährdet, um die Tragteile 1 bis 4 zu bilden. Es hat sich aber herausgestellt, daß zwei miteinander verklebte Marmorplatten 11, 12 eine ausreichende Festigkeit für die Tragteile 1 bis 4 ergeben. Die Klebstoffschicht 13 sollte eine besondere Schlagfestigkeit aufweisen, und hierzu hat sich das Verbundmaterial aus Polyesterharz mit einem Gewebe aus Glasfasern, Carbonatfasern oder Polyamidfasern als besonders günstig herausgestellt. Als Gewebeart kommt das sogenannte Roving-Gewebe in Betracht. Die Marmorplatten werden an ihrer Innenseite mit der flüssigen Polyesterharz-Reaktionsmischung bestrichen, es wird die gegebenenfalls getränkte Gewebeschicht dazwischengefügt und die Platten so lange gegeneinander verspannt, bis das Polyesterharz ausgehärtet ist.

Die so geschaffenen Verbund-Marmorplatten 11, 12, 13 können mit Durchgangsbohrungen versehen werden, um mittels Durchsteckschrauben die Winkel 5 oder sonstige Verbindungselemente zu befestigen. Es ist aber auch möglich, eine verdeckte Befestigungsart zu benutzen, indem man in der Marmorverbundplatte 11, 12, 13 Sacklöcher 14 anbringt, in denen jeweils eine Metallhülse 15 verkittet wird. Die Metallhülse 15 weist ein Innengewinde auf, so daß sich entsprechende Schraubstifte 16 einschrauben lassen, um das jeweilige Verbindungselement zu befestigen. Es ist natürlich auch möglich, Stifte 17 mit einem vorstehenden Gewindeteil zu verbinden, welches über die Oberfläche der Marmorplatte 11 hervorragt, so daß an diesem Gewinde-Stehbolzen 17 die gewünschte Befestigung erfolgen kann. Wie dargestellt, kann das Teil 15 oder 17 auch nur in der einen Platte 11 befestigt sein. Es versteht sich, daß in der besprochenen Weise auch die Holzleisten 7 verdeckt befestigt werden können.

Einige der Stifte können auch als Knebel 18 ausgebildet sein, wobei dann die entsprechende Öffnung im Verbindungselement, beispielsweise dem Winkel 5, schlüssellochartig gestaltet ist, also einen weiten Bereich aufweist, um den Kopf des Knebels 18 hindurchzustecken und den Hals des Knebels 18 in einem engen Bereich des «Schlüssellochs» zu fangen. Diese Verbindungsart mit Knebel kommt vor allem bei der Befestigung der Holzstrebe 8 in Betracht, die zu diesem Zweck an ihren Enden eine jeweilige Schlüssellochplatte 10 besitzt.

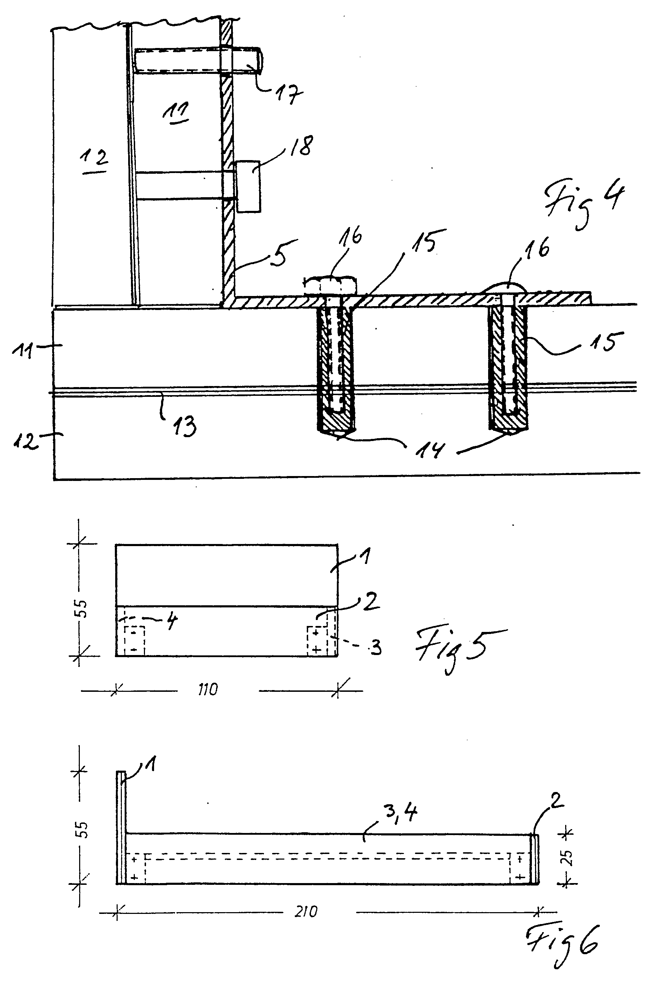

Fig. 5 und 6 zeigen das Gestell eines einfachen Bettes ohne Füße. Die Kopf- und Fußteile 1 und 2 sind demgemäß um die Hälfte verkürzt, während die Seitenteile 3 und 4 unverändert übernommen werden können. Es fehlt natürlich die mittlere Holzstrebe 8. Die sonstige Ausbildung entspricht der Ausführungsform nach Fig. 1 bis 3 mit den zu Fig. 4 gegebenen Erläuterungen.

Fig. 7 und 8 zeigen einen Schrank, der als Schrankregal gestaltet sein kann. Es sind Seitenteile 21, 22 sowie Boden- und Deckteile 23, 24, 25 vorgesehen, die jeweils aus Verbund-Marmorplatten 11, 12, 13 (Fig. 4) bestehen. An den oberen, stirnseitigen Enden der Seitenteile 21, 22 und an den seitlichen, kürzeren Schmalseiten der Boden- und Deckplatten 23, 24 sind Dübel oder Metallhülsen 15 eingekittet, und an entsprechenden Stellen der Seitenteile 21, 22 sowie des Deckteils 25 sind Durchgangsbohrungen 19 vorgesehen, so daß die Teile in der dargestellten Weise zusammengefügt und mittels der Schraubstifte 16 dauerhaft verbunden werden können. In den Seitenteilen 21, 22 sind ferner Sackbohrungen 26 zum Einstecken von Haltestiften 27 angebracht, so daß Regalböden 28 eingelegt werden können. Im unteren Bereich des Schrankregals können Anschlußtüren angebracht werden, und zu diesem Zweck sind in den unteren Stirnseiten Dübel oder Metallhülsen eingekittet, an denen sich ein Scharnier zur Befestigung nicht dargestellter Flügeltüren befestigen läßt. An der Rückseite weisen die Seitenteile eine Aussparung oder Nut 30 auf, um darin eine nicht dargestellte Rückwand, die auch aus Sperrholz bestehen kann, aufzunehmen. Die Rückwand dient außerdem zur Versteifung des Schrankes.

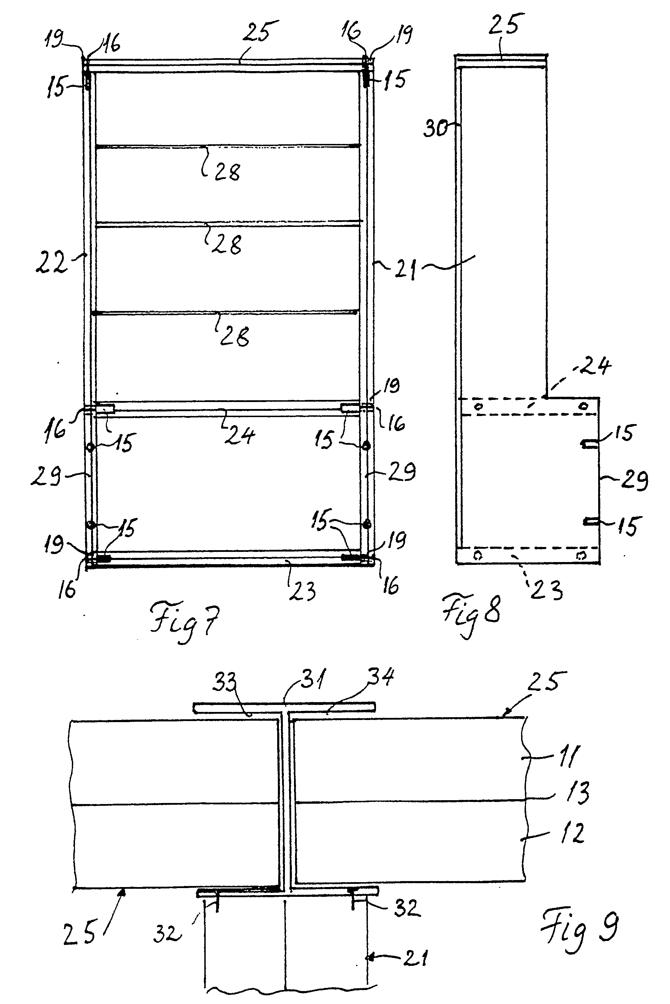

Fig. 9 zeigt die Art und Weise der Kopplung mehrerer Schrankelemente miteinander. Das Seitenteil 21 wird zu einer Mittelwand und nimmt ein metallisches Kopplungsprofil 31 in Form eines Doppel-T auf seiner oberseitigen Schmalseite auf, die in geeigneter Weise befestigt wird, beispielsweise durch Reihen von Schrauben 32. Das Kopplungsprofil 31 weist Aufnahmenuten 33, 34 auf, in welchen die Deckteile 25 benachbarter Schrankelemente eingreifen.

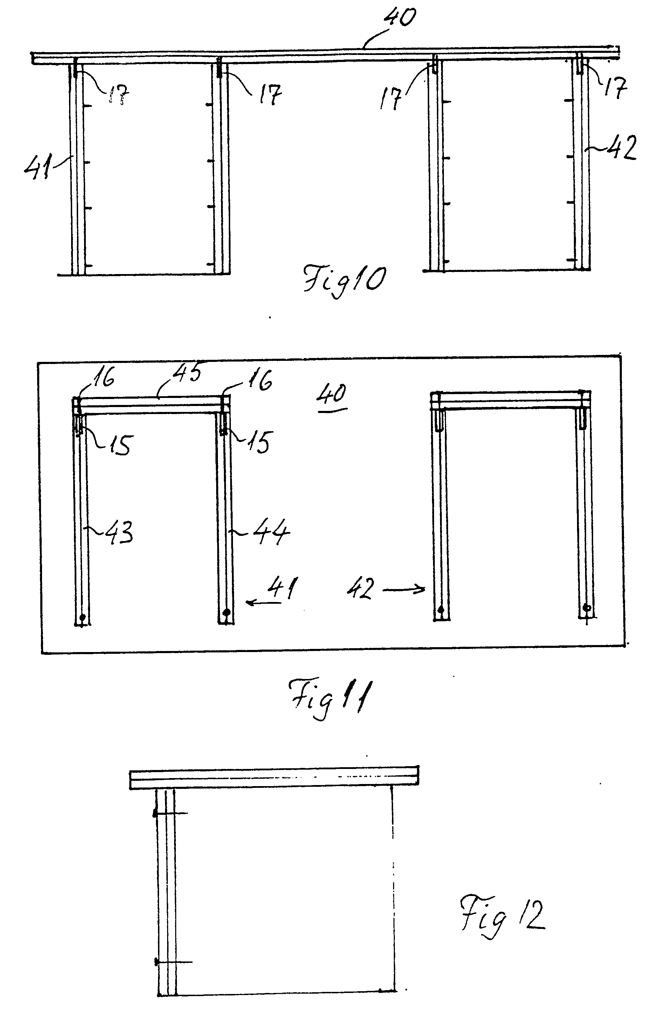

In den Fig. 10 bis 12 ist ein Schreibtisch unter Verwendung der Verbundmarmorplatten 11, 12, 13 dargestellt. Es sind eine Deckplatte 40 und zwei Schubfachkästen 41 und 42 vorgesehen. Die Schubfachkästen enthalten jeweils drei Marmorverbundplatten 43, 44, 45, die unter Verwendung von Dübeln oder Metallhülsen 15 und Schraubstiften 16 miteinander verbunden sind und die an ihren oberen Schmalseiten vorstehende Stifte 17 tragen. Die Deckplatte 40 weist eine Anzahl von Sackbohrungen auf, um die Stifte 17 aufzunehmen und auf diese Weise eine feste Verbindung zwischen den Schubfachkästen 41, 42 und der Deckplatte 40 zu schaffen.

In den Schubfachkästen 41, 42 können wiederum Leisten zur Aufnahme von Schubfächern angebracht werden, wobei man wiederum Reihen von Sacklöchern vorsieht, an denen die Führungsleisten der Schubfächer befestigt sind. Gegebenenfalls können auch Abschlußtüren angebracht werden, und zwar in einer Weise, wie mit Bezug auf Fig. 7 und 8 beschrieben.

## Patentansprüche

1. Möbel, insbesondere Bett, Schrank oder Schreibtisch, mit folgenden Merkmalen:

das Möbelstück enthält Tragteile (1 bis 4; 21 bis 25; 40 bis 44) aus Verbund-Marmorplatten und Verbindungselemente (5, 8, 31) sowie gegebenenfalls Zusatzteile (Füße 6, 9; Leisten 7);

die Tragteile (1 bis 4; 21 bis 25; 40 bis 44) bestehen aus jeweils zwei Marmorplatten (11, 12), die unter Zwischenlage einer Kunststoffschicht (13) miteinander verklebt sind;

die Verbund-Marmorplatten (11, 12, 13) sind mit Durchgangsbohrungen (19) und/oder mit Sacklöchern (14) versehen, in denen jeweils eine Metallhülse (15) oder ein Stift (17) oder ein Knebel (18) verkittet ist;

die Tragteile (1 bis 4; 21 bis 25; 40 bis 44) sind entweder unter Verwendung der Verbindungselemente (5, 8, 31) miteinander verbunden, wobei die Verbindungselemente an den Stiften (17) oder den Knebeln (18) oder mittels Schraubstiften (16) an den Metallhülsen (15) befestigt sind, oder die Tragteile (1 bis 4; 21 bis 25; 40 bis 44) sind unmittelbar unter Verwendung von Schraubstiften (16), die durch Durchgangsbohrungen (19) des einen Tragteils hindurch in Metallhülsen (15) des jeweils anderen Tragteils eingeschraubt sind, miteinander verbunden.

2. Möbel nach Anspruch 1, dadurch gekennzeichnet, daß der Kleber der Kunststoffschicht (13) Polyesterharz ist und daß ein Gewebe in dem Polyesterharz eingebettet ist.

3. Möbel nach Anspruch 2, dadurch gekennzeichnet, daß das Gewebe aus Glasfasern, Carbonatfasern oder Polyamidfasern besteht.

4. Möbel nach einem der Ansprüche 1 bis 3, dadurch gekennzeichnet, daß die Marmorplatten (11, 12) etwa 2 cm dick sind.

5. Möbel nach einem der Ansprüche 1 bis 4, dadurch gekennzeichnet, daß Eckwinkel (5) als Verbindungselemente zwischen senkrecht aufeinander angeordneten Verbund-Marmorplatten vorgesehen sind.

6. Möbel nach einem der Ansprüche 1 bis 5, dadurch gekennzeichnet, daß ein doppel-T-förmiges Kopplungsprofil (31) zur Verbindung zueinander fluchtender Verbund-Marmorplatten (25) vorgesehen ist, die in die Nuten (33, 34) des Kopplungsprofils eingreifen, und daß das Kopplungsprofil (31) an einem gemeinsamen Tragteil (21) befestigt ist.

7. Möbel nach einem der Ansprüche 1 bis 6, dadurch gekennzeichnet, daß zum Anbringen von Einlageteilen (28) Steckstifte (27) und Sacklochreihen (26) in Tragteilen (21, 22) vorgesehen sind.

## Claims

1. An article of furniture, more particularly a bed, a cupboard or desk, having the following features: the article of furniture comprises support parts (1 to 4; 21 to 25; 40 to 44) of laminated marble panels and connecting elements (5, 8, 31) and, if required, additional parts (feet 6, 9; strips 7); the support parts (1 to 4; 21 to 25; 40 to 44) consist in each case of two marble panels (11, 12) glued together with the interposition of a plastics layer (13); the laminated marble panels (11, 12, 13) are provided with continuous bores (19) and/or blind bores (14) in each of which a metal sleeve (15) or a pin (17) or a toggle lever (18) is cemented; the support parts (1 to 4; 21 to 25; 40 to 44) are either interconnected using the connecting elements (5, 8, 31), the latter being secured to the pins (17) or the toggle levers (18) or by screw pins (16) to the metal sleeves (15), or else the support parts (1 to 4; 21 to 25; 40 to 44) are interconnected directly using screw pins (16) screwed through continuous bores (19) in one support part into metal sleeves (15) of the associated other support part.

2. An article of furniture according to claim 1, characterised in that the adhesive for the plastics layer (13) is polyester resin and a fabric is embedded in the polyester resin.

3. An article of furniture according to claim 2, characterised in that the fabric consists of glass fibres, carbonate fibres or polyamide fibres.

4. An article of furniture according to any one of claims 1 to 3, characterised in that the marble panels (11, 12) are about 2 cm thick.

5. An article of furniture according to any one of claims 1 to 4, characterised in that corner brackets (5) are provided as connecting elements between laminated marble panels disposed vertically one upon the other.

6. An article of furniture according to any one of claims 1 to 5, characterised in that a double T-shaped coupling profile (31) is provided to connect aligned laminated marble panels (25), which engage in the grooves (33, 34) of the coupling profile, and the coupling profile (31) is secured to a common support part (21).

7. An article of furniture according to any one of claims 1 to 6, characterised in that guide pins (27) and rows (26) of blind holes are provided in support members (21, 22) for mounting compartment members (28).

## Revendications

1. Meuble, en particulier lit, armoire ou bureau avec les points remarquables ci-après:
— le meuble contient des éléments porteurs (1 à 4; 21 à 25; 40 à 44) en panneaux de marbre composites et des éléments de liaison (5, 8, 31) ainsi qu'éventuellement des éléments additionnels (pieds 6, 9; baguettes 7);
— les éléments porteurs (1 à 24; 21 à 25; 40 à 44) sont constitués chacun de deux panneaux de marbre (11, 12) par intercalation d'une couche de colle synthétique (13);
— les panneaux de marbre composites (11, 12, 13) sont pourvus de trous de passage (19) et/ou de trous borgnes (14) dans chacun desquels sont cimentés une douille de métal (15) ou un goujon (17) ou un boulon à garrot (18);
— les éléments porteurs (1 à 4; 21 à 25; 40 à 44) sont reliés entre eux ou bien par l'intermédiaire des éléments de liaison (5, 8, 31), lesdits éléments de liaison étant fixés aux goujons (17) ou aux vis à garrot (18) ou au moyen de boulons filetés (16) aux douilles de métal (15), ou bien directement grâce à des boulons filetés (16) qui sont vissés à travers des trous de passage (19) de l'un des éléments porteurs dans des douilles de métal (15) de l'autre élément porteur correspondant.

2. Meuble selon la revendication 1, caractérisé en ce que la colle de la couche synthétique (13) est une résine polyester et qu'un tissu est enrobé dans la résine polyester.

3. Meuble selon la revendication 2, caractérisé en ce que le tissu est fait de fibres de verre, de fibres de carbonate ou de fibres de polyamide.

4. Meuble selon une quelconque des revendications 1 à 3, caractérisé en ce que les panneaux de marbre (11, 12) ont une épaisseur d'environ 2 cm.

5. Meuble selon une quelconque des revendications 1 à 4, caractérisé en ce que des cornières d'angle (5) sont prévues comme éléments de liaison entre les panneaux de marbre composites disposés perpendiculairement l'un sur l'autre.

6. Meuble selon une quelconque des revendications 1 à 5, caractérisé en ce qu'il est prévu un profilé d'accouplement (31) en forme de double T pour l'assemblage de panneaux de marbre composites (25) alignés l'un sur l'autre qui s'engagent dans les rainures (33, 34) du profilé d'accouplement, et que le profilé d'accouplement (31) est fixé à un élément porteur (21) commun.

7. Meuble selon une quelconque des revendications 1 à 6, caractérisé en ce que, pour le montage d'éléments intercalaires (28), il est prévu des goujons d'assemblage (27) et des rangées de trous borgnes (26) dans des éléments porteurs (21, 22).

Fig 1

Fig 2

Fig 3

Fig 4

Fig 5

Fig 6

Fig 7

Fig 8

Fig 9

40

17    17    17    17

41    42

*Fig 10*

16    45    16    40

15    15

43    44

41    42 →

*Fig 11*

*Fig 12*